# EUROPEAN PATENT APPLICATION

(11) **EP 4 241 576 A1**
(43) Date of publication of application: **13.09.2023**
(21) Application number: 21860619.2
(22) Date of filing: 07.09.2021
(51) Int. Cl.: A23L 5/10, A23L 3/36

(54) **METHOD FOR PASTEURISING FRIED EGGS**

(71) Applicant: Rodriguez Vazquez, Francisco, 01011 Vitoria (ES); Beltran de Heredia Ruiz, Alexis, 01011 Vitoria (ES)
(72) Inventor: Rodriguez Vazquez, Francisco, 01011 Vitoria (ES); Beltran de Heredia Ruiz, Alexis, 01011 Vitoria (ES)
(74) Representative: Maslanka Kubik, Dorota Irena
(86) International application number: PCT/ES2021/070650
(87) International publication number: WO 2022/043599

(57) **Abstract**

Disclosed is a method for pasteurising fried eggs, comprising the technical steps of: (i) placing in a steam oven at a temperature of 60-70ºC for 20 and 40 minutes; and (ii) placing in a blast chiller between 0-4ºC for 90 minutes; these steps being included in a method for producing and preserving fried eggs, specifically after a step of producing and rapidly cooling the fried egg, and before a step of packaging and storing for distribution.

## Description

### OBJECT OF THE INVENTION

The present invention relates to a method for pasteurising which is integrated in a method for the industrial production of fried eggs for the purpose of prolonging the shelf life of the eggs by a period of not less than two months, keeping all their organoleptic characteristics intact (smell, texture, taste, colour, etc.), as well as completely disallowing the emergence of salmonellosis or other bacteria which may put the good condition thereof at risk.

With this method, fried eggs can be made available quickly within a short time frame, given that these eggs, by being refrigerated, can be regenerated very quickly and in different ways such as in a steam oven, a hot plate, directly in a pan, covering them with hot sauces, placing them over hot products, in a low-power microwave oven, etc., thereby obtaining a fried egg with the same characteristic as freshly fried eggs, with a runny yolk, and without dirtiness, splashing, and/or the presence of smoke.

Likewise, the production of fried eggs with this method is intended for all types of businesses, large fast-food companies, hospitals, catering companies, and obviously establishments with no smoke vents, besides being intended for use by individuals.

The method object of the present invention proposes a solution to the problem relating to the quick expiration of foods of this type since at least the two months are exceeded before consumption.

The industrial application of this invention is comprised among the equipment, systems, and methods for producing and preserving foods, and more specifically pasteurising industrially produced fried eggs.

### BACKGROUND OF THE INVENTION

Although an invention which is identical to the one described cannot be found, documents found which reflect the state of the art related thereto are discussed below.

In that sense, document ES2308822T3 relates to a process for pasteurising in-shell eggs, comprising: immersing and holding at least one stack of a plurality of layers of said eggs in a pre-heating liquid zone until said eggs are substantially uniformly pre-heated throughout said at least one stack; and enveloping said at least one stack in a heating liquid zone until said eggs are pasteurised by absorbing heat from said fluid, all without substantially impairing the functionality of said eggs, further comprising vertically perturbating said pre-heating liquid zone and said heating liquid zone, wherein said vertically perturbating step comprises passing bubbles of at least one gas through said pre-heating liquid zone and said heating liquid zone. This mentioned patent pasteurises in-shell eggs, while the main invention is used for shell-less fried eggs.

Document WO2017114983A1 describe a method for preparing frozen or chilled fried eggs from whole fresh eggs, comprising: breaking whole fresh eggs on a support impregnated with edible fat; inserting the support carrying the broken whole fresh eggs into an oven comprising a ventilation means; heating the oven until the internal part of the yolk of the broken whole fresh eggs reaches a temperature of 65 to 73ºC; removing from the oven said support carrying the eggs, wherein said eggs are fried eggs; cooling the fried eggs to reduce their residual heat to prevent the internal part of the yolk from exceeding 73ºC; freezing or refrigerating cooled fried eggs. In this case, the eggs are deposited on a support impregnated with edible fat and not pasteurised like in the main invention.

Document ES2202460T3 proposes a method for reducing *Salmonella* species present in the yolks of in-shell chicken eggs by at least 5 log such that an in-shell chicken egg is pasteurised, maintaining at the same time an albumen functionality of the egg measured in Haugh units which is not substantially less than the albumen functionality of a corresponding unpasteurised in-shell chicken egg, said method consisting of the steps of: calibrating a pasteurisation method by heating the egg in a heat transfer medium at a temperature between 53.3°C (128°F) and 61.1°C (142°F) until a central portion the egg yolk is heated to a temperature within a range of 53.3°C (128°F) to 59.2°C (138.5°F), monitoring at the same time the temperature of the yolk and adjusting the temperature of the heat transfer medium to maintain the temperature of the yolk for the time established within a parameter line; and processing the batch of eggs according to the calibration method. This other invention also relates to the treatment of in-shell chicken eggs, while the present invention works with fresh shell-less eggs to obtain fried egg directly.

Conclusions: As can be inferred from the research conducted, none of the documents found solves the problems being considered in the way the proposed invention does.

### DESCRIPTION OF THE INVENTION

The method for pasteurising fried eggs object of the present invention comprises a series of steps included in the method for the mass production of fried eggs on an industrial level based on oven trays specific for fried eggs with individual cavities impregnated with olive oil in which fresh shell-less eggs are deposited, although the eggs can be fried by any other method.

This tray is placed in a convection oven at a temperature of about 200-250ºC and is kept in said oven for between 2 minutes and 2.5 minutes in order to fry them, and said tray is passed immediately after that through a rapid cooling tunnel.

Once cooled, the eggs are packaged in heat sealable trays for the method for pasteurising object of the present invention, where said eggs are placed in a steam oven at a temperature of 60-75ºC for 20 and 40 minutes, to then be placed in a blast chiller between 0-4ºC for 90 minutes.

With the cooling method completed, the eggs can now be labelled to be kept in refrigerated chambers at 0-4ºC for subsequent distribution, achieving expiration dates of not less than 60 days.

### DESCRIPTION OF A PREFERRED EMBODIMENT

A preferred embodiment of the method for pasteurising fried eggs object of the present invention is carried out in the following technical steps:
(i) placing in heat sealable trays in a steam oven at a temperature of 60-75ºC for 20 and 40 minutes.
(ii) placing in a blast chiller between 0-4ºC for 90 minutes.

Said steps are included in a method for producing and preserving fried eggs, specifically after the step of producing and rapidly cooling the fried egg, and before the step of labelling and storing for distribution.

## Claims

1. A method for pasteurising fried eggs, based on oven trays specific for fried eggs with individual cavities impregnated with olive oil in which fresh shell-less eggs are deposited, although the eggs can be fried by any other method, said method **characterised by** being carried out based on the following technical steps, between the step of producing and rapidly cooling the fried egg, and the step of labelling and storing for distribution:
(i) placing in a steam oven at a temperature of 60-75ºC for 20 and 40 minutes.
(ii) placing in a blast chiller between 0-4ºC for 90 minutes.
